# EUROPEAN PATENT SPECIFICATION

(11) **EP 2 934 839 B1**
(45) Date of publication and mention of the grant of the patent: **27.03.2019**
(21) Application number: 13819002.0
(22) Date of filing: 16.12.2013
(51) Int. Cl.: B29B 9/08, B29B 9/16, B07B 7/08, C09D 5/03, B05D 1/00, C08L 27/18, B29K 23/00, B29L 31/00

(54) **PROCESS FOR PRODUCING A THERMOPLASTIC POLYMER POWDER**
VERFAHREN ZUR HERSTELLUNG EINES THERMOPLASTISCHEN POLYMERPULVERS
PROCÉDÉ DE PRODUCTION D'UNE POUDRE DE POLYMÈRE THERMOPLASTIQUE

(30) Priority: 21.12.2012 EP 12198855
(43) Date of publication of application: 28.10.2015
(73) Proprietor: Solvay Specialty Polymers Italy S.p.A., 20021 Bollate (MI) (IT)
(72) Inventor: POLASTRI, Fabio, I-20052 Monza (IT); KAPELYUSHKO, Valeriy, I-15100 Alessandria (IT)
(74) Representative: Benvenuti, Federica
(86) International application number: PCT/EP2013/076637
(87) International publication number: WO 2014/095676

(56) References cited:
- EP-A1- 1 120 436
- EP-A1- 1 191 055
- EP-A2- 1 302 505
- WO-A1-96/15891
- DE-A1- 19 748 159
- FR-A1- 2 544 636
- GB-A- 2 078 553
- US-A- 4 523 990
- US-B1- 6 376 647
- US-B1- 6 518 349

## Description

The present application claims priority to European application No. 12198855.4 filed on December 21, 2012

### Technical Field

The present invention relates to a process for producing a thermoplastic polymer powder, and more particularly to a process for producing thermoplastic powders usable in powder coating application.

### Background Art

The use of thermoplastic polymer powders in powder coating is well-known in the art. In a typical powder coating process, the polymer particles are electrostatically charged and deposited on a heated metal surface, and the thus-obtained coating is then heat cured to allow it to flow and form a hard finish. Unlike the conventional liquid paint, a powder coating does not require a solvent to keep the binder and fillers in a liquid suspension form and therefore produces less hazardous organic waste. As an additional advantage over the conventional liquid paint, powder coatings produce thicker coatings with a more homogenous appearance.

Nevertheless, the powdery raw material of a thermoplastic polymer, which is generally obtained after drying and cooling a polymerization product, has a low bulk density and thus causes significant inconveniences in storage and transportation for powder coating use. Moreover, the powdery raw materials are also found to suffer from poor powder fluidity and, as a result, cannot form an acceptable, smooth powder coating finish.

To alleviate these problems, EP 1120436 A (HOSOKAWA MICRON CORPORATION) 8/1/2001 proposes a process for producing thermal plastic resin granules. Said process comprises compression moulding a powdery raw material of a thermoplastic resin, which is obtained by polymerizing a plurality of materials and then drying the obtained polymer, by passing the powdery raw material between two rolls arranged parallel with a minute gap there between at a temperature of 40°C or higher, and crushing the obtained compression-molded product into granules having grain diameters of 10mm or less. Nevertheless, the granules obtained by this process still do not have a desirably high bulk density, or a significantly improved surface roughness.

Moreover, US 6376647 B (DAIKIN INDUSTRIES LTD.) 10/30/1997 and EP 1398342 B (DAIKIN INDUSTRIES, LTD.) 3/17/2004 both describe an identical process for treating the raw powders of fluorine-containing polymer for powder coating. Specifically, as detailed in US 6376647, said process comprises: densifying fluorine-containing polymer raw powder with rolls under conditions for permitting its specific gravity to achieve at least 90% of the true specific gravity; then comminuting the densified material; removing fine particles in the range of 3 to 40% by weight of the whole particle size distribution of the comminuted material by air classification; and further removing coarse particles in the range of 1 to 20% by weight of the whole particle size distribution of the comminuted material by classification. However, said process was proven ineffective when applied for obtaining a thicker film, e.g. a smooth coating with a thickness over 30 microns.

Similarly, US 7735759 B (ELRINGKLINGER AG) 2/7/2008 and the related US 2008/0033132 A (ELRINGKLINGER AG) 2/7/2008 both disclose a method for production of a flowable powder of a fluoropolymer compound, which comprise pressing the powder into hand-shaped lump ("lumpy, hand-shaped intermediate product") and then crushing the lump, wherein the pressing step is carried out by means of at least one roller of a pressing device. This method, however, was not sufficiently effective in providing the polymer powders with uniform grain size within a narrow range.

US 6518349 B (E. I. DU PONT NEMOURS AND COMPANY) 5/29/2000 discloses yet another method for preparing a sprayable powder of fluoropolymer, which involves spray drying a liquid dispersion of primary particles of non-fibrillatable fluoropolymer and densifying the granules formed by spray drying, preferably by mechanical compaction rollers. Nevertheless, such a method requires enormous facilities and high costs, and its productivity is low.

EP 1302505 (E.I. Du Pont De Nemours and Co.) discloses a process for recycling powder coating waste comprising the steps of (1) compressing powder coating waste to powder coating compacts by applying press forces; (2) placing the formed powder coating compacts into a vessel, rotating the vessel about a rotational axis inclined at an angle of 20 to 70 degrees relative to the horizontal and (3) heating the powder coating compacts while being moved in the rotating vessel until through-glassed powder coating bodies are formed.

Therefore, there remains a need to provide a process for producing a thermoplastic polymer powder with improved properties tailored for powder coating application. Particularly, it would be advantageous to have a process to produce thermoplastic polymer powders having uniform size distribution and a higher bulk density, in combination with better flowability and minimized surface roughness.

### Summary of invention

To meet the above need, the present invention provides a process for producing a thermoplastic polymer powder having an average particle size ranging between 1 to 100 µm, which comprises the steps of:
(i) compression-molding a powdery raw material of a thermoplastic polymer to form tablets, by means of a tablet press;
(ii) comminuting the tablets to form the thermoplastic polymer powder;
(iii) classifying the thermoplastic polymer powder to remove particles with a size in a predetermined range and obtain a classified powder; and
(iv) contacting the classified powder with an air stream at a temperature higher than the melting-initiation temperature of the thermoplastic polymer; wherein said process contains an additional step prior to the compression-molding step (i), of providing a powdery raw material of a thermoplastic polymer by drying a thermoplastic resin after polymerization wherein said thermoplastic polymer is a fluoropolymer.

The Applicant has found that, using the process of the present invention, it is possible to obtain thermoplastic polymer powder having a particle size of 100 µm or less. Advantageously, comparing with the powdery raw material of a thermoplastic polymer, the powder obtained by the invented process has a more uniform particle size distribution, a notably higher bulk density, as well as a better flowability and reduced surface roughness. Moreover, using the polymer powders obtained by the invented process, one skilled in the art can easily obtain a thicker coating in a standard electrostatic powder coating procedure.

For the purpose of the present invention, the term "thermoplastic" refers to polymers which exist at room temperature and below their glass transition temperature if they are amorphous or, if they are semi-crystalline, exist below their melting point. The thermoplastic polymers have the property of becoming soft when they are heated and of becoming rigid again when they are cooled, without there being an appreciable chemical change.

The "powdery raw material" of a thermoplastic polymer, as used in the present invention, can be obtained by drying a thermoplastic resin after polymerization. Alternatively, said powder raw material may be obtained by drying and then cooling a thermoplastic resin after polymerization.

Accordingly, the invented process contains an additional step prior to the compression-molding step (i), that is, providing a powdery raw material of a thermoplastic polymer by drying a thermoplastic resin after polymerization.

The "tablet press" used in step (i) of the invented process can be any device used in the art to manufacture tablet product, and generally refers to a mechanical device that compresses a powder or granular material into tablets in at least one cavity formed by two punches and a die, wherein the punches are pressed together with great force to fuse the material together.

Specifically, the tablet press used in the invented process may be a single punch tablet press or a rotary tablet press, both well known in the chemistry art.

In an exemplified embodiment of the present invention, a single punch tablet press is used to form the tablets in step (i) and the tablet formation process is described below. Firstly, the powdery raw material is filled in a feed shoe, which is then emptied into a die cavity of the single punch table press. Subsequently, the feed shoe is retracted and scrapes all excess powder away from the die cavity. An upper punch then compresses the powders within the die cavity. After compression, the upper punch retracts and a low punch raises and ejects the tablet. As the feed shoe returns to fill the die cavity, it pushes the compressed tablet from the die.

Preferably, a rotary tablet press is used to form the tablets in step (i). One classic example of rotary tablet press is described in US 3255716 (E. L. KNOECHEL ET AL), which was issued on June 14, 1966. Such rotary tablet press essentially comprises a main operating unit with a central rotary turret designed to enable the powdery product to be volumetrically dosed into a plurality of dies located in a first rotating disc and equally distributed around the circumference of the disc. In a standard tablet formation procedure using such rotary press, a pair of opposed cam operated punches compress the powder in each die into an individual tablet. The rotary turret arrangement allows a plurality of punch and die sets to continuously produce tablets around the circular path followed by the rotary press by sequentially contacting an arrangement of cam above and below the turret that lift and lower the punches.

In step (i) of the invented process, the tablets are preferably produced at a temperature of 0 to 150°C, preferably 5°C to 80°C, more preferably 10°C to 50°C.

Generally, the tablets obtained in step (i) of the invented process are of a cylinder shape, with a diameter of from 3 mm to 25 mm, preferably 5 mm to 15 mm, and more preferably between 8 mm to 12 mm. The height of the cylindrical tablets is variable by adjusting the compressing force and loading in each die of the tablet press, and is typically ranging from 1 mm to 25 mm, preferably from 2 mm to 15 mm, and more preferably from 3 mm to 10 mm.

In the comminuting step (ii) of the invented process, the tablets obtained from step (i) may be formed into a thermoplastic polymer powder by a mill or a grinding machine.

In a specific embodiment of the invented process, the comminuting step (ii) includes crushing the tablets with a crusher and then milling the crushed tablets by a mill or a grinding machine.

Alternatively, the comminuting step (ii) of the invented process only includes milling the tablets. The milling is usually carried out with a mechanical mill. Examples of the mechanical mill include impact type mills such as a cutter mill, a hammer mill, a pin mill, a jet mill, etc., and grinding type mills which mill a material with a shear force generated by a rotating blade and a peripheral stator. To obtain a high milling efficiency, the millers of a high shear type are preferable. The milling temperature is from -200 to +100°C. In the freeze milling, the temperature is usually from -200 to -100°C, for which liquid nitrogen is often used. However, given the huge facilities and high cost of freeze milling, the milling of the tablets of the invented process is usually carried out at room temperature (10 to 30°C), to keep the whole process simple and economical.

Typically, the thermoplastic polymer powder obtained from step (ii) of the invented process has a particle size of 100 µm or less, with a uniform particle size distribution.

Subsequent to the comminuting step (ii), the invented process includes classification step (iii) below:
(iii) classifying the thermoplastic polymer powder to remove particles with a size in a predetermined range and obtain a classified powder.

Specifically, said classification step (iii) may include the following step(s):
(iii-a) Removing fine particles with a size of less than 1 µm by classification, and/or
(iii-b) Removing coarse particles with a size of more than 100 µm by classification,
wherein the sequence of step (iii-a) and step (iii-b) is exchangeable.

Preferably, step (iii-a) is a step of removing fine particles with a size of less than 5 µm. More preferably, step (iii-a) is a step of removing fine particles with a size of less than 10 µm.

Also preferably, step (iii-b) is a step of removing coarse particles with a size of more than 80 µm. More preferably, step (iii-b) is a step of removing coarse particles with a size of more than 60 µm.

As said, if step (iii-a) and step (iii-b) are both present in the process invention, the sequence thereof is exchangeable. In one embodiment of the process invention, step (iii-a) is performed after step (iii-b).

In general, for the classification of fine particles in step (iii-a), air classification is used. In such air classification, the milled particles are supplied in a cylindrical classifying room with air under reduced pressure, and dispersed with whirling air in the room while the fine particles are being classified by centrifugal force. The fine particles are collected from the center of the room to a cyclone and a bag filter, and again sheeted. In the classifying room, a rotating member such as a cone or a rotor is set for uniformly whirling the particles and the air. When classification cones are used, the classification is controlled by adjusting the flow of secondary air and a gap between the classification cones. When a rotor is used, the classification is controlled by adjusting the flow of air in the classifying room and the rotation speed of the rotor.

The air pressure of a blower is usually from 0.001 to 1 MPa, preferably from 0.01 to 0.5 MPa. The range of classification is usually from 1 to 50% by weight, preferably 3 to 40% by weight, and thus the fine particles and fibrous particles are removed in a percentage of 3 to 40% by weight based on the whole particles. When the amount of the fine particles removed is less than 3% by weight, the flowability of the powder is not improved, and the remaining particles have a very wide particle size distribution so that the leveling property of the coated film deteriorates. When the amount of the particles removed exceeds 40% by weight, the powder becomes less attractive from the viewpoint of costs.

For the classification of coarse particles in step (iii-b), an air classifier or a vibration sieve based on meshes can be used, with the former being preferable. The range of classification based on particle sizes can be adjusted by the operation speed of the employed classifier, which is usually from 1 to 20% by weight, and preferably from 2 to 10% by weight of the whole particle size distribution, to remove the undesired coarse particles.

Preferably, the fine particles recovered in the classification of step (iii-a) are again compression-molded like the powdery raw material in step (i). Likewise, the coarse particles recovered in the classification of step (iii-b) are preferably recycled to be again comminuted like the tables in step (ii).

According to the present invention, the process further includes the following step after step (iii):
(iv) contacting the classified powder with an air stream at a temperature higher than the melting-initiation temperature of the thermoplastic polymer.

For instance, the aforementioned step (iv) can be carried out using a continuous airflow type heating drier. A contact temperature in the continuous airflow type heating drier is usually 1000°C or less, preferably from 200 to 800°C, and a contact time is typically from 0.1 to 10 seconds. A heat source is preferably gas heating for energy saving purpose. The heat-treated powder may be further classified with the air classifier or vibration sieve to remove the coarse particles. Thereby, a powder having a narrower particle size distribution can be obtained.

As a result of step (iv), generally, the surfaces of the powder particles are rounded so that the bulk density and flowability of the powder are further increased, and thus could provide an even better powder coating on the applied articles.

The thermoplastic polymer powder resulted from the invented process, by virtue of its combined attributes of high bulk density, uniform particle size and good flowability, can be advantageously used for powder coating and form a smooth film with a thickness of 30 to 110 µm in only one pass. Moreover, in the films formed by these polymer powders, no pinholes or orange-peel surfaces were observed.

Furthermore, the present invention provides a thermoplastic polymer powder produced by any one of the above processes. The thermoplastic polymer powder has an average particle size of 1 to 100 µm, preferably 3 to 80 µm, and more preferably 5 to 60 µm.

The thermoplastic polymer used in the present invention may be of any kind, for example but not limited to: fluoropolymers, polyethylene, polyethylene terephthalate, polystyrene, acrylonitrile butadiene styrene (ABS), metacrylate polymer, polyamide, polycarbonate, polyacetal, polyphenylene ether, polyphenylene sulphide, polyether ether ketone, polysulfone, polybutylene terephthalate, polyvinylidene chloride, and the like.

Preferably, the thermoplastic polymer used in the present invention is a fluoropolymer, i.e. a polymer comprising recurring units derived from at least one fluorinated monomer. To the purpose of the present invention, the fluoropolymer comprises preferably more than 20 % moles, more preferably more than 30 % moles of recurring units derived from the fluorinated monomer.

In particular, while various fluoropolymers are historically utilized for powder coating application, their powdery raw materials generally do not provide desired uniform particle size and often give poor yield and surface roughness upon coating. The process of the present invention, notably, provides an easy and convenient procedure for improving the physical properties of various fluoropolymer powders, making them well tailored for powder coating application.

Fluoropolymers which have been found particularly suitable for the process of the present invention are per(halo)fluoropolymers. For the purpose of the invention, the term "per(halo)fluoropolymer" is intended to denote a fluoropolymer substantially free of hydrogen atoms. The per(halo)fluoropolymer can comprise one or more halogen atoms (CI, Br, I) different from fluorine. The term "substantially free of hydrogen atom" is understood to mean that the per(halo)fluoropolymer consists essentially of recurring units derived from ethylenically unsaturated monomers comprising at least one fluorine atom and free of hydrogen atoms [per(halo)fluoromonomer (PFM)]. The per(halo)fluoropolymer can be a homopolymer of a per(halo)fluoromonomer (PFM) or a copolymer comprising recurring units derived from more than one per(halo)fluoromonomer (PFM).

Non limitative examples of suitable per(halo)fluoromonomers (PFM) are notably :
C₂-C₈ perfluoroolefins, such as tetrafluoroethylene (TFE) and hexafluoropropene (HFP);
chloro- and/or bromo- and/or iodo- C₂-C₆ per(halo)fluoroolefins, like chlorotrifluoroethylene;
per(halo)fluoroalkylvinylethers complying with general formula CF₂=CFOR_{f1} in which R_{f1} is a C₁-C₆ per(halo)fluoroalkyl, such as -CF₃, - C₂F₅, -C₃F₇;
per(halo)fluoro-oxyalkylvinylethers complying with general formula CF₂=CFOX₀₁, in which X₀₁ is a C₁-C₁₂ per(halo)fluorooxyalkyl having one or more ether groups, like perfluoro-2-propoxy-propyl group;
per(halo)fluoro-methoxy-alkylvinylethers complying with general formula CF₂=CFOCF₂OR_{f2} in which R_{f2} is a C₁-C₆ per(halo)fluoroalkyl, such as - CF₃, -C₂F₅, -C₃F₇ or a C₁-C₆ per(halo)fluorooxyalkyl having one or more ether groups, such as -C₂F₅-O-CF₃;
per(halo)fluorodioxoles of formula : 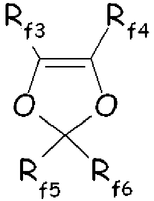 wherein each of R_{f3}, R_{f4}, R_{f5}, R_{f6}, equal of different each other, is independently a fluorine atom, a C₁-C₆ perfluoroalkyl group, optionally comprising one or more oxygen atom, e.g. -CF₃, -C₂F₅, -C₃F₇, -OCF₃, - OCF₂CF₂OCF₃; preferably a per(halo)fluorodioxole complying with formula here above, wherein R_{f3} and R_{f4} are fluorine atoms and R_{f5} and R_{f6} are perfluoromethyl groups (-CF₃) [perfluoro-2,2-dimethyl-1,3-dioxole (PDD)], or a per(halo)fluorodioxole complying with formula here above, wherein R_{f3}, R_{f5} and R_{f6} are fluorine atoms and R_{f4} is a perfluoromethoxy group (-OCF₃) [2,2,4-trifluoro-5-trifluoromethoxy-1,3-dioxole or perfluoromethoxydioxole (MDO)].

The per(halo)fluoropolymer is advantageously chosen among tetrafluoroethylene (TFE) homopolymers and copolymers of TFE with at least one per(halo)fluoromonomer (PFM) different from TFE.

According to one embodiment of the invention, the thermoplastic polymer is chosen among TFE copolymers comprising recurring units derived from at least one per(halo)fluoroalkylvinylether, as above defined, preferably from at least one perfluoroalkylvinylether, as above defined and optionally further comprising recurring units derived from C₃-C₈ perfluoroolefins. Good results within this embodiment have been obtained with TFE copolymers comprising recurring units derived from one or more than one perfluoroalkylvinylether as above specified; particularly good results have been achieved with TFE copolymers wherein the perfluoroalkylvinylether is perfluoromethylvinylether (of formula CF₂=CFOCF₃), perfluoroethylvinylether (of formula CF₂=CFOC₂F₅), perfluoropropylvinylether (of formula CF₂=CFOC₃F₇) and mixtures thereof.

Examples of TFE polymer suitable to be used to produce the thermoplastic polymer powder of the present invention include MFA and PFA which are commercially available from Solvay Solexis Inc. under the trade name of HYFLON® PFA P and M series and HYFLON® MFA.

Furthermore, the present description is also related to the use of a thermoplastic polymer powder produced by one of the aforementioned processes for powder coating. Specifically, the thermoplastic polymer powder can be coated by a coating method such as spray coating, electrostatic spray coating, fluidized bed coating, electrostatic fluidized bed coating, etc. An aqueous dispersion paint or a dispersion paint in an organic solvent may also be used.

### Description of embodiments

The invention will now be described in more detail with reference to the following examples.

### Example

### Materials

The polymer powder used in the following Example and comparative Example is HYFLON® PFA powder obtained from Solvay Specialty Polymers Italy, SPA, which is a copolymer of tetrafluoroethylene and perfluoropropylvinylether.

### Determination of Bulk Density

The bulk density (BD) measurement was carried out according to the ASTM D1895-96 (2003) standard test.

### Measurement of Average Particle Diameter

The average particle diameter of the polymer powder particles was on a Beckman Coulter laser analyzer, model LS 13 320.

### General Procedure of Electrostatic Powder Coating

To test the powder coating efficiency of the polymer powders obtained in the following Example and comparative Example, a carbon steel plate was first sand blasted with 60 mesh sand and than treated with a liquid primer. On the wet primer a layer of polymer powder was applied as top coat with an electrostatic gun (Optiflex system from ITW Gema), under the following conditions: 40 kV Voltage, 15mA Current, 20% Q powder and a total air volume of 3.5 Nm³/h. The coated plate was then placed in an air ventilated oven at 380°C for 20 minutes, and subsequently cooled down at the room temperature.

### Measurement of Coating thickness

For each coated plate prepared as described above, the coating thickness was measured at nine different positions of the plate with an Elcometer 456 coating thickness gauge, and the average value was reported.

### Measurement of Surface Roughness (Rₐ)

Surface roughness Rₐ(µm) of each coated plate was measured using a MITUTOYO SURFTEST SJ-201.

### Example 1

The HYFLON® PFA powder as received (having a bulk density of 0.483 g/cm³ and a particle size distribution as shown in Table 1) was compressed in a rotary tablet press (PR200 manufactured by B&D Italia), at a processing temperature between 10°C to 50°C, to obtain cylindrical tablets each characterized by a diameter of 10 cm and a density of 1.889 g/cm³. Subsequently, the polymer tablets were crushed in an ACM 10 mill manufactured by Alphine Hosokawa, and the crushed tablets were then classified by a classifier attached to the mechanical mill, to remove coarse particles having at least 100 micron in size. The remaining polymer powder was then delivered to a second classifier (Mikro Classifier CC manufactured by Alphine Hosokawa), to remove fine particles with a size of 5 micron or less (the amount of removed fine particles: 32.7% by weight). The resulting polymer powder (densified powder) had an average bulk density of 0.848 g/cm³ and a particle size distribution as shown in Table 1.

The densified powder was then applied on metallic substrate using electrostatic powder coating. The results of its final coating thickness and roughness (Rₐ) are shown in Table 1.

### Comparative Example 1

The HYFLON® PFA powder as received (having a bulk density of 0.483 g/cm³ and a particle size distribution as shown in Table 1) was directly applied on metallic substrate using electrostatic powder coating. The results of its final coating thickness and roughness (Rₐ) are also shown in Table 1.

**Table 1**

| **Sample** | **PSD*** (µm) | | | **BD** | **Coating thickness** | **Rₐ** |
|---|---|---|---|---|---|---|
| | d₁₀% | d₅₀% | d₉₀% | (g/cm³) | (µm) | (µm) |
| Ex. 1 | 10.7 | 24.1 | 43.7 | 0.848 | 89 | 0.9 |
| Comp. Ex. 1 | 2.3 | 17.3 | 74.9 | 0.483 | 40 | 3.7 |

| | | | | | | |
|---|---|---|---|---|---|---|
| **PSD = particle size distribution, for which d₁₀%, d₅₀%, and d₉₀% respectively represents a particle diameter corresponding to a point of 10%, 50% and 90% in the cumulative curve of the polymer particle size distribution.* | | | | | | |

Clearly, compared to the raw polymer powder material, the densified polymer powder produced by the invented process has a more uniform particle size distribution and a notably higher bulk density, which in turn offer a better mechanical strength and efficiency in transportation and storage. Moreover, compared to the unprocessed raw powder, said densified polymer powder advantageously provided a thicker and smoother top coat using a same electrostatic powder coating procedure.

Additionally, the fine particles and coarse particles recovered in the optional classification steps of the invented process can be readily recycled, respectively, to join raw polymer powders in the compression-molding treatment and subsequent classification, to provide better yield of densified polymers with improved performance in electrostatic powder coating.

## Claims

1. A process for producing a thermoplastic polymer powder having an average particle size ranging between 1 to 100 µm, which comprises the steps of:
(i) compression-molding a powdery raw material of a thermoplastic polymer to form tablets, by means of a tablet press;
(ii) comminuting the tablets to form the thermoplastic polymer powder;
(iii) classifying the thermoplastic polymer powder to remove particles with a size in a predetermined range and obtain a classified powder; and
(iv) contacting the classified powder with an air stream at a temperature higher than the melting-initiation temperature of the thermoplastic polymer;
wherein said process contains an additional step prior to the compression-molding step (i), of providing a powdery raw material of a thermoplastic polymer by drying a thermoplastic resin after polymerization
wherein said thermoplastic polymer is a fluoropolymer.

2. The process of claim 1, wherein the tablet press is a rotary tablet press.

3. The process of claim 1, wherein the tablet press is a single punch tablet press.

4. The process of any one of the preceding claims, wherein the step (ii) only includes milling the tablets.

5. The process of claim 1, wherein the step (iii) comprises:
(iii-a) Removing fine particles with a size of less than 1 µm by classification, and/or
(iii-b) Removing coarse particles with a size of more than 100 µm by classification,
wherein the sequence of step (iii-a) and step (iii-b) is exchangeable.

6. The process of claim 5, wherein step (iii-a) is performed after step (iii-b).

7. The process of claim 5 or 6, wherein step (iii-a) is performed by an air classifier.

8. The process of any one of claims 5-7, further comprising: recycling the fine particles removed from step (iii-a) to the compression-molding step (i), and/or recycling the coarse particles removed from step (iii-b) to the comminuting step (ii).

9. The process of any of the preceding claims, wherein the thermoplastic polymer is a per(halo)fluoromonomers (PFM) selected from a group consisting of:
C₂-C₈ perfluoroolefins, such as tetrafluoroethylene (TFE) and hexafluoropropene (HFP);
chloro- and/or bromo- and/or iodo- C₂-C₆ per(halo)fluoroolefins, like chlorotrifluoroethylene;
per(halo)fluoroalkylvinylethers complying with general formula CF₂=CFOR_{f1} in which R_{f1} is a C₁-C₆ per(halo)fluoroalkyl, such as -CF₃, -C₂F₅, -C₃F₇;
per(halo)fluoro-oxyalkylvinylethers complying with general formula CF₂=CFOX₀₁, in which X₀₁ is a C₁-C₁₂ per(halo)fluorooxyalkyl having one or more ether groups, like perfluoro-2-propoxy-propyl group;
per(halo)fluoro-methoxy-alkylvinylethers complying with general formula CF₂=CFOCF₂OR_{f2} in which R_{f2} is a C₁-C₆ per(halo)fluoroalkyl, such as -CF₃, - C₂F₅, -C₃F₇ or a C₁-C₆ per(halo)fluorooxyalkyl having one or more ether groups, such as -C₂F₅-O-CF_{3;}
per(halo)fluorodioxoles of formula : 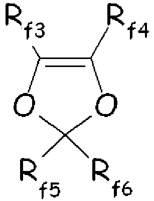 wherein each of R_{f3}, R_{f4}, R_{f5}, R_{f6}, equal of different each other, is independently a fluorine atom, a C₁-C₆ perfluoroalkyl group, optionally comprising one or more oxygen atom, e.g. -CF₃, -C₂F₅, -C₃F₇, -OCF₃, -OCF₂CF₂OCF₃; preferably a per(halo)fluorodioxole complying with formula here above, wherein R_{f3} and R_{f4} are fluorine atoms and R_{f5} and R_{f6} are perfluoromethyl groups (-CF₃) [perfluoro-2,2-dimethyl-1,3-dioxole (PDD)], or a per(halo)fluorodioxole complying with formula here above, wherein R_{f3}, R_{f5} and R_{f6} are fluorine atoms and R_{f4} is a perfluoromethoxy group (-OCF₃) [2,2,4-trifluoro-5-trifluoromethoxy-1,3-dioxole or perfluoromethoxydioxole (MDO)].

## Patentansprüche

1. Verfahren zur Herstellung eines thermoplastischen Polymerpulvers mit einer durchschnittlichen Teilchengröße im Bereich zwischen 1 und 100 µm, welches die folgenden Schritte umfasst:
(i) Formpressen eines pulverförmigen Rohmaterials eines thermoplastischen Polymers unter Bildung von Tabletten, mittels einer Tablettenpresse,
(ii) Zerkleinern der Tabletten unter Bildung des thermoplastischen Polymerpulvers,
(iii) Klassifizieren des thermoplastischen Polymerpulvers zum Entfernen von Partikeln mit einer Größe im vorbestimmten Bereich und unter Erhalt eines klassifizierten Pulvers und
(iv) Inkontaktbringen des klassifizierten Pulvers mit einem Luftstrom bei einer Temperatur, die über der Schmelzanfangstemperatur des thermoplastischen Polymers liegt,
wobei das Verfahren einen zusätzlichen Schritt vor dem Formpressschritt (i) umfasst, bei dem man ein pulverförmiges Rohmaterial eines thermoplastischen Polymers durch Trocknen eines thermoplastischen Harzes nach Polymerisation bereitstellt,
wobei es sich bei dem thermoplastischen Polymer um ein Fluorpolymer handelt.

2. Verfahren nach Anspruch 1, wobei es sich bei der Tablettenpresse um eine Rotationstablettenpresse handelt.

3. Verfahren nach Anspruch 1, wobei es sich bei der Tablettenpresse um eine Einzelstempeltablettenpresse handelt.

4. Verfahren nach einem der vorhergehenden Ansprüche, wobei Schritt (ii) lediglich das Vermahlen der Tabletten umfasst.

5. Verfahren nach Anspruch 1, wobei Schritt (iii) Folgendes umfasst :
(iii-a) das Entfernen feiner Partikel mit einer Größe von weniger als 1 µm durch Klassifizieren und/oder
(iii-b) das Entfernen von groben Partikeln mit einer Größe von mehr als 100 µm durch Klassifizieren,
wobei die Reihenfolge von Schritt (iii-a) und Schritt (iii-b) austauschbar ist.

6. Verfahren nach Anspruch 5, bei dem man Schritt (iii-a) nach Schritt (iii-b) durchführt.

7. Verfahren nach Anspruch 5 oder 6, bei dem man Schritt (iii-a) mit einem Luftklassifizierer durchführt.

8. Verfahren nach einem der Ansprüche 5-7, welches weiterhin Folgendes umfasst: das Recyceln der in Schritt (iii-a) entfernten feinen Partikel zum Formpressschritt (i) und/oder das Recyceln der in Schritt (iii-b) entfernten groben Partikel zum Zerkleinerungsschritt (ii).

9. Verfahren nach einem der vorhergehenden Ansprüche, wobei es sich bei dem thermoplastischen Polymer um ein Per(halogen)fluormonomere (PFM) ausgewählt aus der Gruppe bestehend aus:
C₂-C₈-Perfluorolefinen wie Tetrafluorethylen (TFE) und Hexafluorpropen (HFP),
Chlor- und/oder Brom- und/oder Iod-C₂-C₆-per(halogen)fluorolefinen wie Chlortrifluorethylen,
Per(halogen)fluoralkylvinylethern der allgemeinen Formel CF₂=CFOR_{f1}, in welcher R_{f1} für ein C₁-C₆-Per(halogen)fluoralkyl wie -CF₃, -C₂F₅, -C₃F₇ steht,
Per(halogen)fluoroxyalkylvinylethern der allgemeinen Formel CF₂=CFOX₀₁, in welcher X₀₁ für ein C₁-C₁₂-Per(halogen)fluoroxyalkyl mit einer oder mehreren Ethergruppen steht, wie Perfluor-2-propoxypropylgruppe,
Per(halogen)fluormethoxyalkylvinylethern der allgemeinen Formel CF₂=CFOCF₂OR_{f2}, in welcher R_{f2} für ein C₁-C₆-Per(halogen)fluoralkyl wie -CF₃, -C₂F₅, -C₃F₇ oder ein C₁-C₆-Per(halogen)fluoroxyalkyl mit einer oder mehreren Ethergruppen wie -C₂F₅-O-CF₃ steht,
Per(halogen)fluordioxolen der Formel: 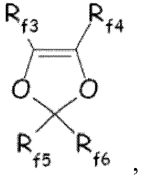 in welcher R_{f3}, R_{f4}, R_{f5}, R_{f6}, gleich oder verschieden voneinander, jeweils unabhängig für ein Fluoratom, eine C₁-C₆-Perfluoralkylgruppe, gegebenenfalls mit einem oder mehreren Sauerstoffatomen, z.B. -CF₃, -C₂F₅, -C₃F₇, -OCF₃, -OCF₂CF₂OCF₃, stehen; vorzugsweise ein Per(halogen)fluordioxol der obigen Formel, in welcher R_{f3} und R_{f4} für Fluoratome stehen und R_{f5} und R_{f6} für Perfluormethylgruppen (-CF₃) stehen [Perfluor-2,2-dimethyl-1,3-dioxol (PDD)] oder ein Per(halogen)fluordioxol der obigen Formel, in welcher R_{f3}, R_{f5} und R_{f6} für Fluoratome stehen und R_{f4} für eine Perfluormethoxygruppe (-OCF₃) steht [2,2,4-Trifluor-5-trifluormethoxy-1,3-dioxol oder Perfluormethoxydioxol (MDO)]
handelt.

## Revendications

1. Procédé pour la production d'une poudre de polymère thermoplastique ayant une taille moyenne des particules comprise entre 1 et 100 µm, qui comprend les étapes de :
(i) moulage par compression d'une matière première pulvérulente constituée d'un polymère thermoplastique pour former des comprimés, au moyen d'une presse à comprimés ;
(ii) comminution des comprimés pour former la poudre de polymère thermoplastique ;
(iii) classement de la poudre de polymère thermoplastique pour éliminer les particules ayant une taille dans une plage prédéfinie et obtenir une poudre classée ; et
(iv) mise en contact de la poudre classée avec un flux d'air à une température supérieure à la température de début de fusion du polymère thermoplastique ;
ledit procédé contenant une étape supplémentaire avant l'étape de moulage par compression (i), de fourniture d'une matière première pulvérulente constituée d'un polymère thermoplastique par séchage d'une résine thermoplastique après polymérisation,
dans lequel ledit polymère thermoplastique est un polymère fluoré.

2. Procédé selon la revendication 1, dans lequel la presse à comprimés est une presse à comprimés rotative.

3. Procédé selon la revendication 1, dans lequel la presse à comprimés est une presse à comprimés alternative.

4. Procédé selon l'une quelconque des revendications précédentes, dans lequel l'étape (ii) comprend uniquement le broyage des comprimés.

5. Procédé selon la revendication 1, dans lequel l'étape (iii) comprend :
(iii-a) l'élimination de fines particules ayant une taille inférieure à 1 µm par classement et/ou
(iii-b) l'élimination de particules grossières ayant une taille de plus de 100 µm par classement,
l'ordre de l'étape (iii-a) et de l'étape (iii-b) étant échangeable.

6. Procédé selon la revendication 5, dans lequel l'étape (iii-a) est effectuée après l'étape (iii-b).

7. Procédé selon la revendication 5 ou 6, dans lequel l'étape (iii-a) est effectuée par un classificateur pneumatique.

8. Procédé selon l'une quelconque des revendications 5-7, comprenant en outre : le recyclage des fines particules éliminées à partir de l'étape (iii-a) vers l'étape de moulage par compression (i) et/ou le recyclage des particules grossières éliminées à partir de l'étape (iii-b) vers l'étape de comminution (ii).

9. Procédé selon l'une quelconque des revendications précédentes, dans lequel le polymère thermoplastique est un per(halogéno)fluoromonomères (PFM) choisis dans un groupe constitué par :
les perfluorooléfines en C₂-C₈, telles que le tétrafluoroéthylène (TFE) et l'hexafluoropropène (HFP) ;
les chloro- et/ou bromo- et/ou iodo-per(halogéno)fluorooléfines en C₂-C₆, comme le chlorotrifluoroéthylène ;
les per(halogéno)fluoroalkylvinyléthers répondant à la formule générale CF₂=CFOR_{f1} dans lesquels R_{f1} est un per(halogéno)fluoroalkyle en C₁-C₆, tel que -CF₃, -C₂F₅, -C₃F₇ ;
les per(halogéno)fluoro-oxyalkylvinyléthers répondant à la formule générale CF₂=CFOX₀₁, dans lesquels X₀₁ est un per(halogéno)fluorooxyalkyle en C₁-C₁₂ ayant un ou plusieurs groupes éther, comme le groupe perfluoro-2-propoxypropyle ;
les per(halogéno)fluoro-méthoxy-alkylvinyléthers répondant à la formule générale CF₂=CFOCF₂OR_{f2} dans lesquels R_{f2} est un per(halogéno)fluoroalkyle en C₁-C₆, tel que -CF₃, -C₂F₅, -C₃F₇, ou un per(halogéno)fluorooxyalkyle en C₁-C₆ ayant un ou plusieurs groupes éther, tel que -C₂F₅-O-CF₃ ;
les per(halogéno)fluorodioxoles de formule : 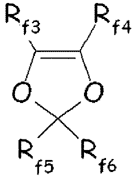 dans lesquels chacun de R_{f3}, R_{f4}, R_{f5} et R_{f6}, identique aux autres ou différents des autres, est indépendamment un atome de fluor, un groupe perfluoroalkyle en C₁-C₆, comprenant éventuellement un ou plusieurs atomes d'oxygène, par exemple -CF₃, -C₂F₅, -C₃F₇, -OCF₃, -OCF₂CF₂OCF₃ ; de préférence un per(halogéno)fluorodioxole répondant à la formule ci-dessus, dans lequel R_{f3} et R_{f4} sont des atomes de fluor et R_{f5} et R_{f6} sont des groupes perfluorométhyle (-CF₃) [le perfluoro-2,2-diméthyl-1,3-dioxole (PDD)] ou un per(halogéno)fluorodioxole répondant à la formule ci-dessus, dans lequel R_{f3}, R_{f5} et R_{f6} sont des atomes de fluor et R_{f4} est un groupe perfluorométhoxy (-OCF₃) [le 2,2,4-trifluoro-5-trifluorométhoxy-1,3-dioxole ou perfluorométhoxydioxole (MDO)].
